# EUROPEAN PATENT APPLICATION

(11) **EP 2 595 029 A1**
(43) Date of publication of application: **22.05.2013**
(21) Application number: 11189144.6
(22) Date of filing: 15.11.2011
(51) Int. Cl.: G06F 1/16

(54) **Handheld electronic device having a flexible display**

(71) Applicant: Research In Motion Limited, Waterloo, ON N2L 3W8 (CA)
(72) Inventor: Ladouceur, Norman Miner, Wingham, Ontario N0G 2W0 (CA); Griffin, Jason Tyler, Waterloo, Ontario N2L 3W8 (CA)
(74) Representative: Hibbert, Juliet Jane Grace

(57) **Abstract**

A handheld electronic device includes a housing, a flexible display associated with the housing, and an input portion linked to the housing. The flexible display has a folded arrangement in which the flexible display defines a first portion and a second portion. The device is configured to sandwich the input portion in-between the first portion of the flexible display and the second portion of the flexible display when the flexible display is in the folded arrangement.

## Description

### Field

This disclosure relates generally to handheld electronic devices and, more particularly, to handheld electronic devices having a flexible display.

### Background Information

Numerous types of handheld electronic devices are known. Examples of such handheld electronic devices include, for instance, personal data assistants (PDAs), handheld computers, two-way pagers, mobile telephones, and the like. Some handheld electronic devices feature wireless communication capabilities. Other handheld electronic devices are stand-alone devices that are functional without communication with other devices.

A typical handheld electronic device has a display supported by a housing. The display is generally a non-flexible component having fixed physical dimensions. In addition to the display, a typical handheld electronic device also includes an input portion including a keyboard, keypad, touchpad, gamepad, touchscreen, or a combination of such input devices.

Certain devices benefit from a large display area, but have a correspondingly large overall size. In attempts to provide a more compact and portable design, some handheld electronic devices have incorporated a flexible display permitting a certain amount of bending of the device. With advances in flexible displays, the minimum bend radiuses of some of these flexible displays have been reduced so that the flexible displays can be folded when a handheld electronic device is closed.

Even when using some of the most advanced flexible displays, there are limits on the extent to which displays can be folded. In some instances, a small bend radius can result in a region of high mechanical stress causing delamination and/or failure of the flexible display.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:

FIG. 1 is a side view of a handheld electronic device in a closed configuration, consistent with disclosed embodiments;

FIG. 2 is a perspective top view of a handheld electronic device in an open configuration, consistent with disclosed embodiments;

FIG. 3A is a side view of a handheld electronic device in a closed configuration, according to a first exemplary embodiment;

FIG. 3B is a side view of the handheld electronic device of FIG. 3A in an open configuration with an input portion in a first position;

FIG. 3C is a side view of the handheld electronic device of FIG. 3A in an open configuration with the input portion in a second position;

FIG. 4A is a side view of a handheld electronic device in a closed configuration, according to a second exemplary embodiment;

FIG. 4B is a side view of the handheld electronic device of FIG. 4A in an open configuration with an input portion in a first position;

Fig. 4C is a side view of the handheld electronic device of FIG. 4A in an open configuration with the input portion in an intermediate position between the first position and a second position; and

Fig. 4D is a side view of the handheld electronic device of FIG. 4A in an open configuration with the input portion in the second position.

### DETAILED DESCRIPTION

Reference will now be made in detail to exemplary embodiments, examples of which are illustrated throughout the drawings. Wherever possible, the same reference numbers are used in the drawings and the description to refer to the same or like parts.

The disclosure generally relates to a handheld electronic device. Examples of handheld electronic devices include mobile wireless communication devices such as pagers, mobile phones, mobile smart-phones, wireless organizers, personal digital assistants, wireless-enabled notebook computers, and any other known communication device.

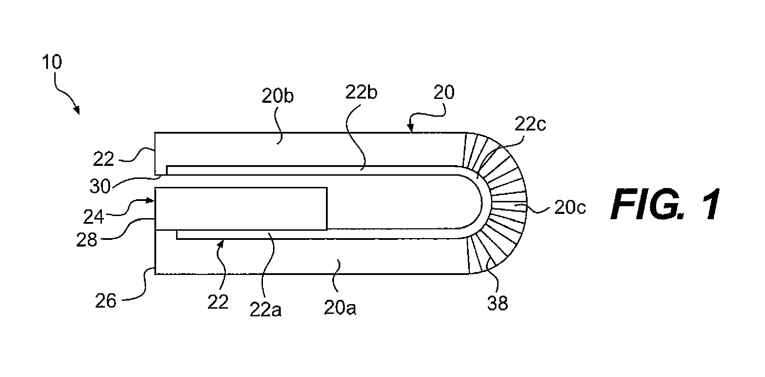

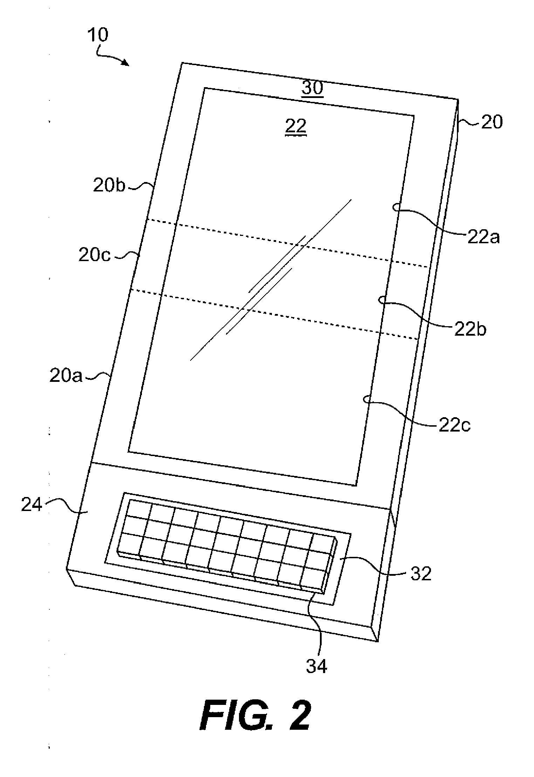

An exemplary handheld electronic device 10 is illustrated in FIGS. 1 and 2. As shown in these figures, handheld electronic device 10 is of the "flip" or "foldable" variety which, as will be described below, refers to the ability of the device to be translated between a closed configuration (FIG. 1) and an open configuration (FIG. 2). Handheld electronic device 10 includes a housing 20, a flexible display 22, and an input portion 24.

Housing 20 has a first housing portion 20a, a second housing portion 20b, and a flexible housing portion 20c between first housing portion 20a and second housing portion 20b. As shown in FIG. 1, first housing portion 20a is substantially parallel to second housing portion 20b, when handheld electronic device 10 is in the closed configuration. As shown in FIG. 2, first housing portion 20a and second housing portion 20b are aligned in the same plane so as to provide a substantially flat arrangement when handheld electronic device 10 is in the open configuration.

Flexible housing portion 20c connects first housing portion 20a and second housing portion 20b to one another. Flexible housing portion 20c is comprised of flexible material and configured to provide a flexible hinge. On application of a force by a user of handheld electronic device 10, second housing portion 20b is movable, relative to first housing portion 20a, about flexible housing portion 20c to translate electronic handheld device 10 from the closed configuration (FIG. 1) to the open configuration (FIG. 2), and vice versa. In some embodiments, flexible housing portion 20c includes stiffening ribs 38 to control the bend radius of housing 20 in the closed configuration. Ribs 38, or other structures, also maintain first housing portion 20a and second housing portion 20b in the substantially flat arrangement in the open configuration.

Flexible display 22 is associated with housing 20. Flexible display 22 includes a flexible organic light-emitting diode (OLED) display, a flexible e-ink display, a flexible liquid crystal display (LCD), or another type of flexible display. In some embodiments, flexible display 22 is a touch screen display.

Flexible display 22 is disposed on a front face 30 of housing 20, and extends across first housing portion 20a, flexible housing portion 20c, and second housing portion 20b. In some embodiments, a length dimension of flexible display 22 is substantially similar to a length dimension of housing 20. However, flexible display 22 may have any other desired dimensions. Electrical circuits (not shown) associated with flexible display 22 are disposed in first housing portion 20a and second housing portion 20b, and are connected by flexible electronics (not shown) extending through flexible housing portion 20c.

Flexible display 22 has a substantially planar arrangement in the open configuration shown in FIG. 2, and is configured to be folded about a bendable portion 22c to provide a folded arrangement in the closed configuration shown in FIG. 1. When flexible display 22 is arranged in the folded arrangement, flexible display 22 defines a first portion 22a and a second portion 22b connected to one another by bendable portion 22c. In the folded arrangement, first portion 22a is substantially parallel to and spaced from second portion 22b.

Flexible display 22 is configured to define a maximum angle of rotation of 180 degrees when flexible display 22 is folded from the substantially planar arrangement shown in FIG. 2 to the folded arrangement of FIG. 1. The angle of rotation is defined by, e.g., movement of second portion 22b when second portion 22b is rotated relative to first portion 22a (or vice versa) about bendable portion 22c. Flexible display 22 is configured to be folded about bendable portion 22c up to the maximum angle of rotation so that the bend radius defined by flexible display 22 is not smaller than the minimum bend radius of flexible display 22. The minimum bend radius is defined as the radius beyond which flexible display 22 should not be bent as it may result in unduly high mechanism stresses causing, for example, delamination or failure of flexible display 22. The radius corresponds to the curvature of bendable portion 22c of flexible display, as measured on the inside surface of the bend. It should be understood that the maximum angle of rotation and the minimum bend radius could vary based on the flexibility of the material components of flexible display 22.

Input portion 24 is linked to housing 20 so as to permit input portion 24 to be moved relative to housing 20. In the illustrated embodiment depicted in FIG. 2, a largest dimension of input portion 24 is parallel to a width dimension of housing 20. Input portion 24 has a user interface surface 32 which includes one or more input devices 34. Examples of such input devices 34 include, for example, a keyboard, keypad, touchpad, gamepad, or a track ball, or any other type of input device.

As illustrated in FIG. 1, input portion 24 is disposed so as to be sandwiched in-between first portion 22a of flexible display 22 and second portion 22b of flexible display 22 (and in-between first and second housing portions 20a and 20b) when handheld electronic device 10 is in the closed configuration. It should be noted that FIG. 1 shows second portion 22b of flexible display 22 spaced from input portion 24 for ease of illustration. It is contemplated that second portion 22b of flexible display 22 can be spaced from input portion 24 or, alternatively, second portion 22b can contact input portion 24 in the closed configuration.

In the closed configuration, input portion 24 acts like a spacer and resists compression of handheld electronic device 10. In particular, input portion 24 limits second portion 22b of flexible display 22 from moving in a direction towards first portion 22a of flexible display 22 (and vice versa), e.g., when a user applies a downward force on second housing portion 20b. In this manner, input portion 24 protects the flexible display 22 from damage as it prevents flexible display 22 from having a bend radius that is smaller than the minimum bend radius of flexible display 22.

As will be discussed in more detail below in connection with exemplary embodiments, input portion 24 is movable between a plurality of positions when handheld electronic device 10 is in an open configuration and flexible display 22 has a substantially planar arrangement, so as to cover and uncover a portion of flexible display 22. In particular, input portion 24 can move from a first position, in which input portion 24 lies on flexible display 22, to a second position. In the second position, shown, for example, in Fig. 2, a top of input portion 24 is adjacent to and flush with a bottom of first housing portion 20a. In some embodiments, input portion 24 can assume a number of positions between the first position and the second position.

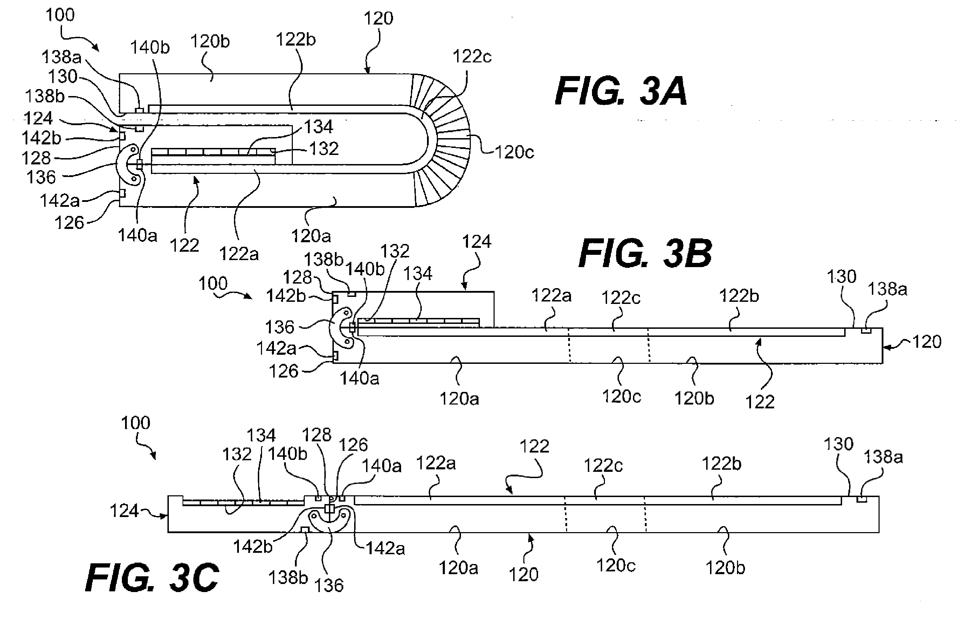

Referring to FIGS. 3A-C, a handheld electronic device 100 in accordance with a first embodiment will be described. Handheld electronic device 100 includes a housing 120, a flexible display 122 associated with housing 120, and an input portion 124 linked to housing 120 so as to permit input portion 124 to be moved relative to housing 120. Input portion 124 includes a user interface surface 132 having one or more input devices 134. While the user interface surface 132 of the depicted embodiment includes a keypad, it is contemplated that user interface surface 132 can include one or more other input devices 134 known to one of ordinary skill in the art.

Housing 120 has a first housing portion 120a, a second housing portion 120b, and a flexible housing portion 120c that connects first housing portion 120a and second housing portion 120b to one another. Flexible display 122 is disposed on a front face 130 of housing 120, and extends across first housing portion 120a, flexible housing portion 120c, and second housing portion 120b.

When handheld electronic device 100 is in the closed configuration, housing 120 is folded about flexible housing portion 120c. In this configuration, first housing portion 120a is substantially parallel to second housing portion 120b and flexible display 122 is in a folded arrangement. In this folded arrangement, flexible display 122 defines a first portion 122a and a second portion 122b, connected to one another by a bendable portion 122c. Flexible housing portion 120c and bendable portion 122c of flexible display 122 are configured so that first portion 122a of flexible display 122 is substantially parallel to and spaced from second portion 122b of flexible display 122 in the folded arrangement. Flexible display 122 is configured to define a maximum angle of rotation of 180 degrees when flexible display 122 is folded into the folded arrangement. The angle of rotation is defined by, e.g., movement of second portion 122b when second portion 122b is rotated relative to first portion 122a (or vice versa) about bendable portion 122c. Flexible display 122 is configured to be folded about bendable portion 122c up to the maximum angle of rotation so that the bend radius defined by flexible display 122 is not smaller than the minimum bend radius of flexible display 122. It should be understood, however, that the maximum angle of rotation and the minimum bend radius could vary based on the flexibility of the material components of flexible display 122.

As illustrated in FIG. 3A showing the closed configured of device 100, input portion 124 is sandwiched in-between first portion 122a of flexible display 122 and second portion 122b of flexible display 122 (and in-between first and second housing portions 120a and 120b). It should be noted that FIG. 3A shows second portion 122b of flexible display 122 spaced from input portion 124 for ease of illustration. It is contemplated that second portion 122b of flexible display 122 can be spaced from input portion 124 or, alternatively, second portion 122b can contact input portion 124 in the closed configuration.

Input portion 124 acts like a spacer and resists compression of handheld electronic device 100. In particular, input portion 124 limits second portion 122b of flexible display 122 from moving in a direction towards first portion 122a of flexible display 122 (and vice versa), e.g., when a user applies a downward force on second housing portion 122b. In this manner, input portion 124 protects the flexible display 122 from damage as it prevents flexible display 122 from having a bend radius that is smaller than the minimum bend radius of flexible display 122.

It is contemplated that handheld electrical device 100 can include one or more retaining arrangements to retain the positional relationship of first housing portion 120a, input portion 124, and second housing portion 120b in the closed configuration. In the exemplary embodiment illustrated in FIG. 3A, second housing portion 120b and input portion 124a include a pair of magnets 138a, 138b that are configured to releasably couple second housing portion 120b to input portion 124 in the closed configuration.

On application of a force by a user of handheld electronic device 100, second housing portion 120b is rotatable relative to the first housing portion 120a about flexible housing portion 120c to translate electronic handheld device 100 between the closed configuration (FIG. 3A) and the open configurations (FIGS.3B and 3C). In the partially open configuration of FIG. 3B and the fully open configuration of FIG. 3C, first housing portion 120a, second housing portion 120b, and flexible housing portion 120c have a substantially flat arrangement, and flexible display 122 is arranged in a substantially planar arrangement.

input portion 124 is linked to housing 120, and is arranged to move relative to hosing 120. In particular, when flexible display 122 is arranged in the substantially planar arrangement shown in FIG. 3B, a user can pivot input portion 124 from a first position illustrated in FIG. 3B to a second position illustrated in FIG. 3C, and vice versa. When Input portion 124 is in the first position, input portion 124 lies on flexible display 122 with user interface surface 132 facing flexible display 122. Accordingly, input portion 124 partially covers flexible display 122. When input portion 124 is in the second position, a top 128 of input portion 124 is adjacent to and flush with a bottom 126 of housing 120 (i.e., first housing portion 120a). In this arrangement, flexible display 122 is fully exposed.

A suitable rotating arrangement allows input portion 124 to pivot, relative to housing 120, between the first position illustrated in Fig. 3B and the second position illustrated in FIG. 3C. In one example, the rotating arrangement includes a pivot hinge 136 attached to input portion 124 and housing 120. Pivot hinge 136 is configured such that top 128 of input portion 124 is flush with bottom 126 of housing 120, and user interface surface 132 is in the same plane as flexible display 122, when input portion 124 is in the second position. Any suitable alternative rotating arrangement may be used.

Handheld electronic device 100 also includes a retainer arrangement configured to releasably retain input portion 124 in the first position (FIG. 3B) and second position (FIG. 3C). Many retainer arrangements of handheld electronic devices are known to one of ordinary skill in the art and will not be described in detail herein. Any suitable arrangement may be used. In one example, the retainer arrangement includes a first pair of magnets 140a, 140b that are configured to magnetically couple input portion 124 to first housing portion 120a when input portion is in the first position, and a second pair of magnets 142a, 142b that are configured to magnetically couple input portion 124 to first housing portion 120a when input portion 124 is in the second position.

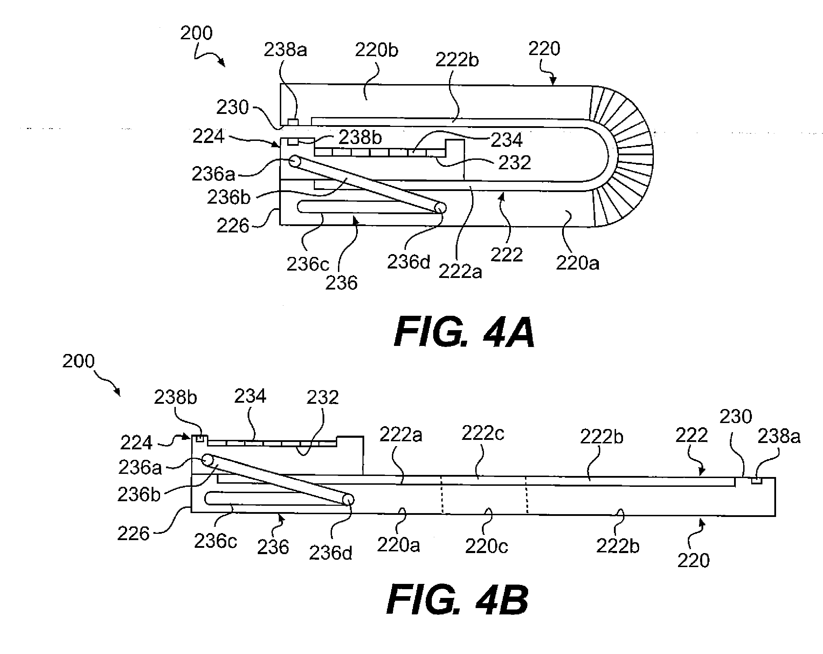

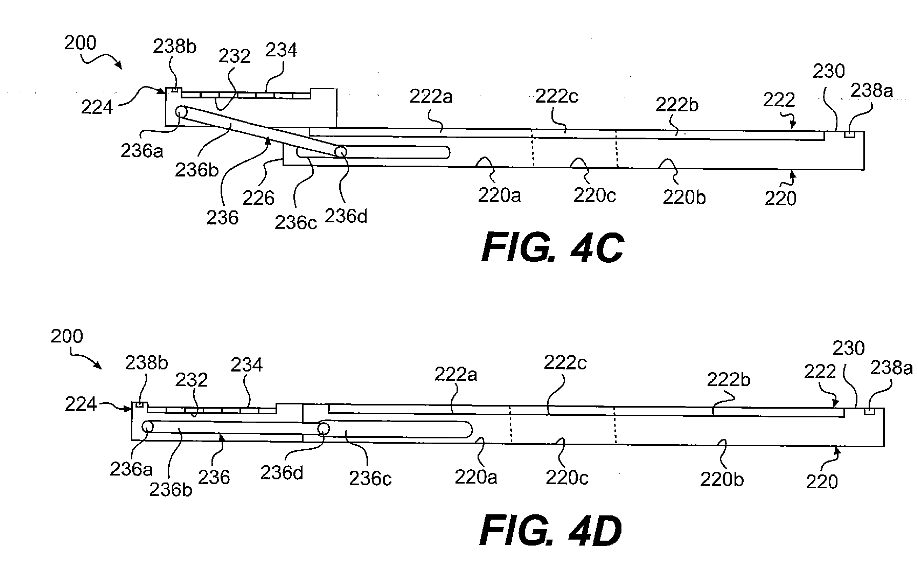

Referring to FIGS. 4A-4D, a handheld electronic device 200 in accordance with a second embodiment will be described. Handheld electronic device 200 includes a housing 220, a flexible display 222 associated with housing 220, and an input portion 224 linked to housing 220 by a linking mechanism 236. Input portion 224 includes a user interface surface 232 having one or more input devices 234.

Housing 220 has a first housing portion 220a, a second housing portion 220b, and a flexible housing portion 220c that connects first housing portion 220a and second housing portion 220b to one another. Flexible display 222 is disposed on a front face 230 of housing 220, and extends across first housing portion 220a, flexible housing portion 220c, and second housing portion 220b.

As in the embodiment discussed above, when handheld electronic device 200 is in the closed configuration, housing 220 is folded about flexible housing portion 220c. In this configuration, first housing portion 220a is substantially parallel to second housing portion 220b and flexible display 222 is in a folded arrangement. In this folded arrangement, flexible display 222 defines a first portion 222a and a second portion 222b connected to one another by a bendable portion 222c. Flexible housing portion 220c and bendable portion 222c of flexible display 222 are configured so that first portion 222a of flexible display 222 is substantially parallel to and spaced from second portion 222b of flexible display 222 in the folded arrangement. Flexible display 222 is configured to define a maximum angle of rotation of 180 degrees when flexible display 222 is folded into the folded arrangement. The angle of rotation is defined by movement of second portion 222b when second portion 222b is rotated relative to first portion 222a (or vice versa) about bendable portion 222c. Flexible display 222 is configured to be folded about bendable portion 222c up to the maximum angle of rotation so that the bend radius defined by flexible display 222 is not smaller than the minimum bend radius of flexible display 222. It should be understood, however, that the maximum angle of rotation and the minimum bend radius could vary based on the flexibility of the material components of flexible display 222.

As illustrated in FIG. 4A in the closed configured of device 200, input portion 224 is sandwiched in-between first portion 222a of flexible display 222 and second portion 222b of flexible display 222 (and in-between first and second housing portions 220a and 220b). It should be noted that FIG. 3A shows second portion 222b of flexible display 222 spaced from input portion 224 for ease of illustration. It is contemplated that second portion 222b of flexible display 222 can be spaced from input portion 224 or, alternatively, second portion 222b can contact input portion 224 in the closed configuration.

Input portion 224 acts like a spacer and resists compression of handheld electronic device 200. In particular, input portion 224 limits second portion 222b of flexible display 222 from moving in a direction towards first portion 222a of flexible display 222 (or vice versa), e.g., when a user applies a downward force on second housing portion 222b. In this manner, input portion 224 protects flexible display 222 from damage as it prevents flexible display 222 from having a bend radius that is smaller than the minimum bend radius of flexible display 222.

It is contemplated that handheld electrical device 200 can include one or more retaining arrangements to retain the positional relationship of first housing portion 220a, input portion 224, and second housing portion 220b in the closed configuration. In the exemplary embodiment illustrated in FIG. 4A, second housing portion 220b and input portion 224a include a pair of magnets 238a, 238b that are configured to releasably couple second housing portion 220b to input portion 224 in the closed configuration.

On application of a force by a user of handheld electronic device 200, second housing portion 220b is rotatable relative to the first housing portion 220a about flexible housing portion 220c to translate electronic handheld device 200 between the closed configuration (FIG. 4A) and the open configurations (FIGS. 4B-4D). FIGS. 4B-4C illustrate handheld electronic device 200 in partially open configurations and FIG. 4D illustrates the handheld electronic device in a fully open configuration. In these figures, first housing portion 220a, second housing portion 220b, and flexible housing portion 220c have a substantially flat arrangement, and, consequently, flexible display 222 is arranged in a substantially planar arrangement.

input portion 224 is linked to housing 220 in a manner permitting input portion 224 to translate and rotate relative to housing 220. In particular, when handheld electronic device 200 is in the open configuration, a user can displace input portion 224 from a first position illustrated in FIG. 4B to a second position illustrated in FIG. 4D. When input portion 224 is in the first position shown in FIG. 4B, input portion 224 lies on flexible display 222 with user interface surface 232 facing away from first housing portion 220a. In this position, a user has access to input devices 234 on interface surface 232. Additionally, a user is able to view a portion of flexible display 222 that is not covered by input device 224. When input portion 224 is in the second position as shown in FIG. 4D, input portion 224 and housing 220 are in the same plane. In this arrangement, flexible display 222 is fully viewable by a user of handheld electronic device 200.

Linking mechanism 236 allows input portion 224 to be displaced via translation and rotation, relative to first housing portion 220a, to move input portion 224 between the first position illustrated in Fig. 4B and the second position illustrated in FIG. 4D. Referring to FIGS. 4B-4D, linking mechanism 236 includes a link 236b having a first end 236a and a second end 236d. First end 236a of link 236b is rotatably attached to input portion 224. Second end 236d is configured to slide and rotate in a guide 236c formed in first housing portion 220a. When a user manually engages input portion 224 and applies a sufficient force, input portion 224 is displaced axially relative to bottom 226 of housing 220. First end 236a and second end 236d are spring loaded such that, when input portion 224 has cleared bottom 226 of housing 220, input portion 224 is positioned in the same plane as housing 220. Linking mechanism 236 may also act as a retainer mechanism to maintain input portion 224 in the first position and the second position, respectively.

The embodiments shown in the drawings provide users with a compact, portable electronic handheld device having a folding structure and a flexible display. The device maintains a minimum bend radius of the folded flexible display when the electronic handheld device is in the closed configuration, so as to protect the flexible display from damage. At least some embodiments of the electronic handheld device have the added benefit of allowing users to select a desired display area in partially open and fully open configurations.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting.

## Claims

1. A handheld electronic device (10, 100, and 200), comprising:
a housing (20, 120, and 220);
a flexible display (22, 122, and 222) associated with the housing, the flexible display having a folded arrangement in which the flexible display defines a first portion (22a, 122a, and 222a) and a second portion (22b, 122b, and 222b); and
an input portion (24, 124, and 224) linked to the housing, wherein the device is configured to sandwich the input portion in-between the first portion of the flexible display and the second portion of the flexible display when the flexible display is in the folded arrangement.

2. The handheld electronic device of claim 1, wherein the flexible display is configured to transition between the folded arrangement and a substantially planar arrangement.

3. The handheld electronic device of claim 2, wherein the housing includes a first housing portion (20a, 120a, 220a) and a second housing portion (20b, 120b, and 220b) movable relative to the first housing portion to transition the flexible display between the folded arrangement and the substantially planar arrangement.

4. The handheld electronic device of claim 3, wherein the housing further includes a flexible housing portion (20c, 120c, and 220c) connected to the first housing portion and the second housing portion to permit the second housing portion to move relative to the first housing portion.

5. The handheld electronic device of claim 1, wherein the input portion is movable relative to the housing between a first position and a second position when the flexible display is in the substantially planar arrangement, wherein the input portion lies on the flexible display in the first position, and wherein a top (28, 128, and 228) of the input portion is adjacent to a bottom (26, 126, and 226) of the housing in the second position.

6. The handheld electronic device of claim 5, wherein the device is configured such that, when the input portion is in the first position, the input portion at least partially covers the flexible display.

7. The handheld electronic device of claim 5, wherein the device is configured such that, when the input portion is in the second position, the flexible display is fully viewable to a user of the handheld electronic device.

8. The handheld electronic device of claim 1, wherein the flexible display includes a bendable portion (22c, 122c, and 222c), and wherein the flexible display is configured to be folded about the bendable portion with the first portion spaced from and substantially parallel to the second portion.

9. The handheld electronic device of claim 8, wherein the flexible display is configured to define a maximum angle of rotation of 180° when the flexible display is folded into the folded arrangement.

10. The handheld electronic device of claim 8, wherein, when the flexible display is folded about the bendable portion, the input portion is configured to limit movement of the second portion of the flexible display in a direction of the first portion of the flexible display.

11. The handheld electronic device of claim 1, wherein the housing includes a first housing portion (20a, 120a, 220a) and a second housing portion (20b, 120b, and 220b), and wherein the second housing portion is rotatably arranged relative to the first housing portion such that the handheld electronic device is movable between an open configuration and a closed configuration.

12. The handheld electronic device of claim 11, wherein the device is configured such that the input portion is disposed in-between the first housing portion and the second housing portion adjacent the flexible display in the closed configuration.

13. The handheld electronic device of claim 11, wherein the flexible display has the folded arrangement when the device is in the closed configuration.

14. The handheld electronic device of claim 11, wherein the flexible display defines a substantially planar arrangement when the device is in the open configuration.

15. The handheld-electronic device of claim 14, wherein the input portion is movable relative to the housing between a first position and a second position when the device is in the open configuration, wherein the input portion lies on the flexible display in the first position, and wherein a top (28, 128, and 228) of the input portion is adjacent to a bottom (26, 126, and 226) of the housing in the second position.

## Amended claims

### Amended claims in accordance with Rule 137(2) EPC.

**1.** A handheld electronic device (10, 100, and 200), comprising:
a housing (20; 120; 220) having a first housing portion (20a; 120a; 220a), a second housing portion (20b; 120b; 220b), and a flexible housing portion (20c; 120c; 220c) connected to the first housing portion and the second housing portion;
a flexible display (22; 122; 222) associated with the housing, the flexible display having a folded arrangement in which the flexible display defines a first portion (22a; 122a; 222a), a second portion (22b; 122b; 222b) and a bendable portion (22c; 122c; 222c) , and wherein the flexible display is folded about the bendable portion with the first portion spaced from and substantially parallel to the second portion; and
an input portion (24; 124; 224) linked to the housing, wherein the device is configured to sandwich the input portion in-between the first portion of the flexible display and the second portion of the flexible display when the flexible display is in the folded arrangement, and wherein, when the flexible display is in the folded arrangement, the input portion (24; 124; 224) resists compression of the device.

**2.** The handheld electronic device of claim 1, wherein the flexible display is configured to transition between the folded arrangement and a substantially planar arrangement.

**3.** The handheld electronic device of claim 2, wherein the second housing portion (20b; 120b; 220b) is movable relative to the first housing portion to transition the flexible display between the folded arrangement and the substantially planar arrangement.

**4.** The handheld electronic device of claim 3, wherein the flexible housing portion (20c; 120c; 220c) is configured to permit the second housing portion to move relative to the first housing portion.

**5.** The handheld electronic device of claim 1, wherein the input portion is movable relative to the housing between a first position and a second position when the flexible display is in the substantially planar arrangement, wherein the input portion lies on the flexible display in the first position, and wherein a top (28; 128; 228) of the input portion is adjacent to the bottom of the housing in the second position.

**6.** The handheld electronic device of claim 5, wherein the device is configured such that, when the input portion is in the first position, the input portion at least partially covers the flexible display.

**7.** The handheld electronic device of claim 5, wherein the device is configured such that, when the input portion is in the second position, the flexible display is fully viewable to a user of the handheld electronic device.

**8.** The handheld electronic device of claim 1, wherein the flexible display is configured to define a maximum angle of rotation of 180° when the flexible display is folded into the folded arrangement.

**9.** The handheld electronic device of claim 1, wherein, when the flexible display is folded about the bendable portion, the input portion is configured to limit movement of the second portion of the flexible display in a direction of the first portion of the flexible display.

**10.** The handheld electronic device of claim 1, wherein the second housing portion is rotatably arranged relative to the first housing portion such that the handheld electronic device is movable between an open configuration and a closed configuration.

**11.** The handheld electronic device of claim 10, wherein the device is configured such that the input portion is disposed in-between the first housing portion and the second housing portion adjacent the flexible display in the closed configuration.

**12.** The handheld electronic device of claim 10, wherein the flexible display has the folded arrangement when the device is in the closed configuration.

**13.** The handheld electronic device of claim 10, wherein the flexible display defines a substantially planar arrangement when the device is in the open configuration.

**14.** The handheld electronic device of claim 13, wherein the input portion is movable relative to the housing between a first position and a second position when the device is in the open configuration, wherein the input portion lies on the flexible display in the first position, and wherein a top (28; 128; 228) of the input portion is adjacent to a bottom (26; 126; 226) of the housing in the second position.
